# EUROPÄISCHE PATENTSCHRIFT

(11) **EP 2 706 422 B1**
(45) Veröffentlichungstag und Bekanntmachung des Hinweises auf die Patenterteilung: **27.07.2016**
(21) Anmeldenummer: 12183930.2
(22) Anmeldetag: 11.09.2012
(51) Int. Cl.: G05B 23/02

(54) **Verfahren zur rechnergestützten Überwachung des Betriebs eines technischen Systems, insbesondere einer elektrischen Energieerzeugungsanlage**
Method for computer-implemented monitoring of the operation of a technical system, in particular an electrical energy production assembly
Procédé de surveillance assistée par ordinateur du fonctionnement d'un système technique, en particulier d'une installation de production d'énergie électrique

(43) Veröffentlichungstag der Anmeldung: 12.03.2014
(73) Patentinhaber: Siemens Aktiengesellschaft, 80333 München (DE)
(72) Erfinder: Brummel, Hans-Gerd, 13465 Berlin (DE); Heesche, Kai, 81539 München (DE); Pfeifer, Uwe, 12557 Berlin (DE); Sterzing, Volkmar, 85579 Neubiberg (DE)

(56) Entgegenhaltungen:
- WO-A1-2011/129805
- WO-A2-2012/164075
- D. Juricic ET AL: "FAULT DETECTION BASED ON GAUSSIAN PROCESS MODELS", Proceedings 5th MATHMOD Vienna, 1. Februar 2006 (2006-02-01), Seiten 1-10, XP55049598, Gefunden im Internet: URL:http://dsc.ijs.si/jus.kocijan/GPdyn/20 06/JurKoc06.pdf [gefunden am 2013-01-15]
- ENRICO ZIO ET AL: "Confidence in signal reconstruction by the Evolving Clustering Method", PROGNOSTICS AND SYSTEM HEALTH MANAGEMENT CONFERENCE (PHM-SHENZHEN), 2011, IEEE, 24. Mai 2011 (2011-05-24), Seiten 1-7, XP031998471, DOI: 10.1109/PHM.2011.5939535 ISBN: 978-1-4244-7951-1
- ILYA MOKHOV ET AL: "Advanced Forecasting and Classification Technique for Condition Monitoring of Rotating Machinery", 16. Dezember 2007 (2007-12-16), INTELLIGENT DATA ENGINEERING AND AUTOMATED LEARNING - IDEAL 2007; [LECTURE NOTES IN COMPUTER SCIENCE], SPRINGER BERLIN HEIDELBERG, BERLIN, HEIDELBERG, PAGE(S) 37 - 46, XP019085429, ISBN: 978-3-540-77225-5 * das ganze Dokument *
- B. Lang ET AL: "Neural Clouds for Monitoring of Complex Systems", Optical Memory and Neural Networks (Information Optics), 1. Januar 2008 (2008-01-01), Seiten 183-192, XP055049602, Gefunden im Internet: URL:http://rd.springer.com/content/pdf/10. 3103/S1060992X08030016 [gefunden am 2013-01-15]

## Beschreibung

Die Erfindung betrifft ein Verfahren und eine Vorrichtung zur rechnergestützten Überwachung des Betriebs eines technischen Systems, insbesondere einer elektrischen Energieerzeugungsanlage. Ferner betrifft die Erfindung ein entsprechendes technisches System und ein Computerprogrammprodukt.

Zur Zustandsüberwachung eines technischen Systems, wie z.B. einer elektrischen Energieerzeugungsanlage und insbesondere einer Gasturbine, muss eine Vielzahl von Prozessparametern beobachtet werden, um aus dem aktuellen Werten dieser Parameter Informationen abzuleiten, ob sich das technische System im bestimmungsgemäßen Zustand befindet. Zwar existieren für entsprechende Prozessgrößen zulässige Bereiche, die durch Grenzwerte nach oben und unten definiert sind und auch permanent im Betrieb des technischen Systems überwacht werden. Diese Bereiche sind jedoch in der Regel sehr breit und werden nur bei groben Fehlfunktionen und Ausfällen des technischen Systems verlassen.

Um in einem technischen System Fehlfunktionen festzustellen, die langfristig zu einer Schädigung des Systems führen können, ist es aus dem Stand der Technik bekannt, den Betrieb des technischen Systems rechnergestützt basierend auf analytischen Prozessmodellen zu überwachen. Dabei werden z.B. thermodynamische Prozesse durch entsprechende Modellierungsgleichungssysteme abgebildet, welche anschließend für eine Echtzeitrechnung in einer Leitstelle des technischen Systems aufbereitet werden. Im Realbetrieb werden durch die Prozessmodelle entsprechende Sollwerte von Ausgangsgrößen des technischen Systems basierend auf aktuellen Eingangsgrößen des Systems ausgegeben. Die Sollwerte werden dann mit den tatsächlich aufgetretenen Prozessgrößen verglichen und bei größeren Abweichungen wird ein Fehlbetrieb des technischen Systems festgestellt bzw. ein Alarm ausgegeben.

Analytische Prozessmodelle funktionieren zwar zur Überwachung bestimmter technischer Systeme sehr gut, weisen jedoch einige Nachteile und Einschränkungen auf. Insbesondere setzt die Verwendung von Prozessmodellen voraus, dass ein entsprechendes Modell existiert, was nicht für alle Arten von technischen Systemen der Fall ist. Zur Erreichung einer hohen Genauigkeit bzw. Selektivität der Zustandsüberwachung des technischen Systems muss das Modell eine hohe Genauigkeit besitzen, was wiederum mit einem hohen personellen und zeitlichen Aufwand bei der Erstellung des Modells verbunden ist. Die Qualität eines hochkomplexen analytischen Prozessmodells hängt vor allem von der Widerspiegelung der Konfiguration des realen technischen Systems ab. Da technische Systeme und insbesondere elektrische Energieerzeugungsanlagen oftmals kunden- und standortspezifisch konfiguriert sind, ist eine detaillierte Einzelanpassung der Modelle für die spezifischen technischen Systeme erforderlich, was extrem zeit- und kostenintensiv ist. Ferner müssen bei einer Änderung der Konfiguration des technischen Systems, z.B. beim Einbau energieeffizienterer Aggregate, alle davon betroffenen Parameter und Zusammenhänge identifiziert und im analytischen Prozessmodell aktualisiert werden. Zudem enthalten die Gleichungssysteme von analytischen Prozessmodellen oftmals sehr viele Parameter, die nur geschätzt oder empirisch ermittelt werden können, was wiederum die Genauigkeit des Modells einschränkt. Ferner können sich solche Parameter im Laufe der Zeit ändern, was wiederum Fehler in der Modellrechnung verursacht und somit zu Fehlalarmen bei der Überwachung des technischen Systems führen kann.

Die Druckschrift [7] offenbart ein Verfahren zur Detektion von Fehlern in Sensormessungen, bei dem Sensorausgaben mittels eines datengetriebenen Modells basierend auf Gaußschen Prozessen prädiziert werden und mit den tatsächlichen Sensorausgaben verglichen werden. Dabei wird ein Validierungsindex ermittelt, der umso größer ist, je größer die Ähnlichkeit zwischen den zur Prädiktion der Sensorausgabe verwendeten Daten und den zum Lernen des datengetriebenen Modells verwendeten Daten ist.

In dem Dokument [8] wird die Überwachung eines technischen Systems über die Rekonstruktion von Signalen mittels eines datengetriebenen Modells beschrieben. Dabei wird für das rekonstruierte Signal ein Konfidenzmaß ermittelt, welches die Trainingsdaten, die zum Lernen des datengetriebenen Modells verwendet werden, mit den Testdaten vergleicht, aus denen das Signal rekonstruiert wird.

Aufgabe der Erfindung ist es, ein einfaches und effizientes Verfahren zur rechnergestützten Überwachung eines technischen Systems zu schaffen.

Diese Aufgabe wird durch die unabhängigen Patentansprüche gelöst. Weiterbildungen der Erfindung sind in den abhängigen Patentansprüchen definiert.

Das erfindungsgemäße Verfahren dient zur rechnergestützten Überwachung des Betriebs eines technischen Systems, insbesondere einer elektrischen Energieerzeugungsanlage und besonders bevorzugt einer Gasturbine. Das technische System ist dabei zu entsprechenden Betriebszeitpunkten durch einen Zustandsvektor aus einer Anzahl von Eingangsgrößen und zumindest einer zu überwachenden Ausgangsgröße charakterisiert, wobei die Anzahl von Eingangsgrößen und die zumindest eine Ausgangsgröße Betriebsgrößen des technischen Systems und/oder Größen sind, die den Betrieb des technischen Systems beeinflussen.

In einem Schritt a) des erfindungsgemäßen Verfahrens wird für jeweilige Betriebszeitpunkte die zumindest eine Ausgangsgröße basierend auf im Betrieb des technischen Systems aufgetretenen Eingangsgrößen mit einem datengetriebenen Modell prognostiziert, das mittels Trainingsdaten aus bekannten Zustandsvektoren gelernt ist. Die im Betrieb des technischen Systems aufgetretenen Eingangsgrößen umfassen dabei zumindest die zum jeweiligen Betriebszeitpunkt aufgetretenen Eingangsgrößen und können gegebenenfalls auch Eingangsgrößen zu weiteren vorhergehenden Zeitpunkten enthalten. Im erfindungsgemäßen Verfahren können unterschiedliche datengetriebene Modelle zur Prognose der zumindest einen Ausgangsgröße verwendet werden. In einer besonders bevorzugten Ausführungsform wird dabei ein neuronales Netz, insbesondere ein rekurrentes neuronales Netz, verwendet. Insbesondere können neuronale Netzstrukturen zum Einsatz kommen, die in den Druckschriften [2], [3] und [4] beschrieben sind.

In einem Schritt b) des erfindungsgemäßen Verfahrens werden für jeweilige Betriebszeitpunkte ferner ein oder mehrere Dichteschätzer, welche mittels bekannten Eingangsgrößen der Trainingsdaten gelernt sind, auf die Anzahl von Eingangsgrößen zum entsprechenden Betriebszeitpunkt angewendet, wodurch ein Konfidenzmaß bestimmt wird, welches umso höher ist, je größer die Ähnlichkeit der Eingangsgrößen zum entsprechenden Betriebszeitpunkt zu bekannten Eingangsgrößen aus den Trainingsdaten ist. Der oder die Dichteschätzer geben somit Auskunft darüber, wie dicht bekannte Eingangsgrößen aus den Trainingsdaten in der Umgebung der zur Prognose verwendeten Eingangsgrößen liegen. Ein hohes Konfidenzmaß repräsentiert somit eine höhere Dichte im Datenraum der Eingangsgrößen. Als Dichteschätzer können an sich bekannte Verfahren aus dem Stand der Technik verwendet werden. In einer besonders bevorzugten Ausführungsform kommt als Dichteschätzer ein Neural Clouds Algorithmus zum Einsatz, der in der Druckschrift [6] beschrieben ist und auch als Datenenkapsulator bezeichnet wird. Auf den Algorithmus aus der Druckschrift [6] wird in der detaillierten Beschreibung näher eingegangen. Dieser Algorithmus wird auch zur Dichteschätzung in dem Verfahren des Dokuments [5] verwendet.

In einem Schritt c) des erfindungsgemäßen Verfahrens wird für jeweilige Zyklen aus mehreren aufeinander folgenden Betriebszeitpunkten eine über die Anzahl der Zustandsvektoren im jeweiligen Zyklus gemittelte gewichtete Abweichung zwischen der zumindest einen prognostizierten Ausgangsgröße und der zumindest einen, im Betrieb des technischen Systems aufgetretenen Ausgangsgröße bestimmt, wobei in der gemittelten gewichteten Abweichung Zustandsvektoren, deren Anzahl von Eingangsgrößen geringe Konfidenzmaße aufweisen, weniger gewichtet sind. Wie weiter unten beschrieben wird, kann gegebenenfalls eine Schwelle des Konfidenzmaßes eingeführt werden, wobei nur Konfidenzmaße oberhalb der Schwelle in der gemittelten gewichteten Abweichung einfließen.

In einem Schritt d) des erfindungsgemäßen Verfahrens wird ein Fehlbetrieb des technischen Systems festgestellt, falls alle gemittelten gewichteten Abweichungen für eine Anzahl von aufeinander folgenden Zyklen, welche größer als eine vorbestimmte Zahlenschwelle ist, ein oder mehrere Kriterien umfassend das Kriterium erfüllen, dass diese Abweichungen betragsmäßig einen vorgegebenen Schwellwert überschreiten. Gegebenenfalls kann dieses Kriterium das einzige Kriterium zur Feststellung eines Fehlbetriebs sein, sofern die Richtung, in welcher der Wert der prognostizierten Ausgangsgröße von der tatsächlichen Ausgangsgröße abweicht, keine Rolle spielt.

In einer bevorzugten Ausführungsform der Erfindung wird in Schritt d) ein Fehlbetrieb festgestellt, falls alle gemittelten gewichteten Abweichungen für die Anzahl von aufeinanderfolgenden Zyklen, welche größer als die vorbestimmte Zahlenschwelle ist, das weitere Kriterium erfüllen, dass sie prognostizierten Ausgangsgrößen entsprechen, welche immer kleiner oder immer größer als die entsprechenden, im Betrieb des technischen Systems aufgetretenen Ausgangsgrößen sind. Ein Fehler wird somit dann festgestellt, wenn die Abweichung nicht nur betragsmäßig über einem Schwellwert liegt, sondern auch in eine bestimmte Richtung erfolgt. Für bestimmte Ausgangsgrößen, wie z.B. dem weiter unten genannten Verdichterwirkungsgrad einer Gasturbine, sind nur Abweichungen relevant, bei denen die prognostizierte Ausgangsgröße ausschließlich kleiner oder ausschließlich größer als die tatsächlich im Betrieb des technischen Systems aufgetretene Ausgangsgröße ist.

Das erfindungsgemäße Verfahren weist den Vorteil auf, dass das verwendete datengetriebene Modell auf einfache Weise mit Trainingsdaten gelernt werden kann und präzise Prognosen für spezifische technische Systeme liefert. Insbesondere benötigen datengetriebene Modelle wenig Rechenzeit in der Ausführungsphase. Darüber hinaus wird im erfindungsgemäßen Verfahren erreicht, dass prognostizierte Ausgangsgrößen, welche von Eingangsgrößen stammen, die geringe Ähnlichkeit zu Trainingsdaten aufweisen, weniger stark bei der Bestimmung der gemittelten gewichteten Abweichung einfließen, was die Zuverlässigkeit der Vorhersagen bzw. der Feststellung eines Fehlbetriebs des technischen Systems erhöht.

In einer bevorzugten Ausführungsform wird dann, wenn ein Fehlbetrieb des technischen Systems festgestellt wird, ein Alarm ausgegeben und/oder eine oder mehrere Sicherungsmaßnahmen zum Schutz des technischen Systems eingeleitet. Der Alarm kann die Ausgabe eines Signals, z.B. eines akustischen und/oder optischen und/oder haptischen Signals, und/oder das Versenden einer Nachricht, z.B. einer SMS und/oder einer E-Mail und dergleichen, umfassen. Die Sicherungsmaßnahmen können darin bestehen, dass das technische System entlastet wird bzw. ganz abgeschaltet wird.

Die zumindest eine Ausgangsgröße, welche mit dem erfindungsgemäßen Verfahren überwacht wird, kann eine beliebige Betriebsgröße bzw. den Betrieb des technischen Systems beeinflussende Größe sein. Insbesondere kann die Ausgangsgröße eine Messgröße im technischen System umfassen und/oder aus einer oder mehreren Messgrößen im technischen System ermittelt werden. Das erfindungsgemäße Verfahren weist ferner den Vorteil auf, dass die Ausgangsgröße eine im Betrieb des technischen Systems geregelte Größe sein kann, welche konstant gehalten wird. Dies ist möglich, da die geregelte Größe mit einer prognostizierten geregelten Größe verglichen wird, welche bei Fehlfunktionen des Systems von dem geregelten Wert abweichen kann.

In einer weiteren Variante des erfindungsgemäßen Verfahrens ist die Anzahl von Eingangsgrößen, welche in einem jeweiligen Zustandsvektor enthalten sind, basierend auf einem trainierbaren statistischen Modell festgelegt. Insbesondere kann hierzu das in den Druckschriften [1] bzw. [2] beschriebene statistische Modell verwendet werden. Gegebenenfalls besteht auch die Möglichkeit, dass die Anzahl der Eingangsgrößen, welche in einem jeweiligen Zustandsvektor enthalten sind, basierend auf Expertenwissen festgelegt ist.

Wie bereits oben erwähnt, ist das in der Erfindung verwendete datengetriebene Modell vorzugsweise ein neuronales Netz. Nichtsdestotrotz kann das erfindungsgemäße Verfahren auch mit datengetriebenen Modellen in der Form von Support Vector Machines und/oder Gaußschen Prozessen kombiniert werden.

In einer weiteren, besonders bevorzugten Ausführungsform des erfindungsgemäßen Verfahrens wird die gemittelte gewichtete Abweichung derart bestimmt, dass in der gemittelten gewichteten Abweichung nur Zustandsvektoren berücksichtigt werden, deren Anzahl von Eingangsgrößen Konfidenzmaße oberhalb einer Konfidenzschwelle aufweisen, wobei die in der gemittelten gewichteten Abweichung berücksichtigten Zustandsvektoren vorzugsweise gleich stark gewichtet sind. Nichtsdestotrotz besteht auch die Möglichkeit, dass die einzelnen Abweichungen für die entsprechenden Zustandsvektoren im Zyklus mit einem Faktor multipliziert werden, der umso größer ist, je größer das Konfidenzmaß der entsprechenden Eingangsgrößen des Zustandsvektors ist. Ein solcher Faktor kann z.B. durch eine Funktion modelliert werden.

In einer weiteren vorteilhaften Variante des erfindungsgemäßen Verfahrens wird der vorgegebene Schwellwert mittels Validierungsdaten umfassend bekannte Zustandsvektoren zu entsprechenden Betriebszeitpunkten festgelegt, wobei für jeweilige Betriebszeitpunkte aus den Validierungsdaten die Streuung der Abweichungen zwischen der zumindest einen Ausgangsgröße, welche mit dem gelernten datengetriebenen Modell basierend auf Eingangsgrößen aus den Validierungsdaten prognostiziert wird, und der zumindest einen Ausgangsgröße bestimmt wird, welche in dem Zustandsvektor der Validierungsdaten in zum entsprechenden Betriebszeitpunkt enthalten ist, wobei aus der Streuung der Abweichungen der vorgegebene Schwellwert derart bestimmt wird, dass der vorgegebene Schwellwert umso größer ist, je größer die Streuung ist. Vorzugsweise wird dabei die Streuung durch die Standardabweichung oder Varianz der Häufigkeitsverteilung der mittels der Validierungsdaten ermittelten Abweichungen repräsentiert oder die Streuung hängt von der Standardabweichung der oder der Varianz ab, wobei der vorgegebene Schwellwert vorzugsweise die Standardabweichung oder die Varianz multipliziert mit einem positiven Faktor darstellt. Es hat sich gezeigt, dass mit einer derartigen Wahl des Schwellwerts sehr gut ein Fehlbetrieb des technischen Systems von einem Normalbetrieb unterschieden werden kann.

In einer Variante der Erfindung wird in Schritt d) jedes Mal, wenn die gemittelte gewichtete Abweichung für einen Zyklus das oder die obigen Kriterien umfassend das Kriterium erfüllt, dass sie betragsmäßig einen vorgegebenen Schwellwert überschreitet, ein Zähler weitergezählt, wobei bei jedem Weiterzählen des Zählers eine Warnung ausgegeben wird und ferner dann ein Fehlbetrieb des technischen Systems festgestellt wird, wenn das Weiterzählen des Zählers ergibt, dass die Anzahl der zeitlich aufeinander folgenden Zyklen größer als die vorbestimmte Zahlenschwelle ist, wobei der Zähler auf einen Initialwert zurückgesetzt wird, wenn die gemittelte gewichtete Abweichung das oder die Kriterien nicht erfüllt. Wie oben beschrieben, können die Kriterien gegebenenfalls das weitere Kriterium umfassen, dass die gemittelte gewichtete Abweichung einer oder mehreren prognostizierten Ausgangsgrößen entspricht, welche immer kleiner oder immer größer als die entsprechenden, im Betrieb des technischen Systems aufgetretenen Ausgangsgrößen sind.

In einer bevorzugten Variante der soeben beschriebenen Ausführungsform können verschiedene Arten von Warnungen in Abhängigkeit davon ausgegeben werden, in wie viel aufeinander folgenden Zyklen seit Zurücksetzen des Zählers die gemittelten gewichteten Abweichungen das oder die Kriterien erfüllen. Auf diese Weise können verschiedene Stufen von Warnungen je nach Dringlichkeit implementiert werden.

In Analogie zu dem oben beschriebenen Alarm kann auch die Warnung die Ausgabe eines Signals, wie z.B. eines akustischen und/oder optischen und/oder haptischen Signals, und/oder das Versenden einer Nachricht, wie z.B. einer SMS und/oder einer E-Mail, umfassen.

In einer weiteren Ausgestaltung des erfindungsgemäßen Verfahrens wird ein Lernen des datengetriebenen Modells und/oder des oder der Dichteschätzer in vorbestimmten Zeitabständen mit im Laufe des Betriebs des technischen Systems neue Zustandsvektoren als Trainingsdaten wiederholt. Auf diese Weise wird das rechnergestützte Überwachungsverfahren adaptiv während des Betriebs des technischen Systems an neu hinzugekommene Betriebsdaten angepasst.

In einer besonders bevorzugten Ausführungsform wird mit dem erfindungsgemäßen Verfahren der Betrieb einer elektrischen Energieerzeugungsanlage umfassend eine Gasturbine überwacht. Das Verfahren kann jedoch gegebenenfalls auch für andere Energieerzeugungsanlagen, z.B. Dampfturbinen oder Windturbinen oder auch Windkraftanlagen, zum Einsatz kommen.

Bei der Verwendung des erfindungsgemäßen Verfahrens in Kombination mit einer Gasturbine umfasst die Anzahl von Eingangsgrößen und/oder die zumindest eine Ausgangsgröße vorzugsweise eine oder mehrere der folgenden Größen der Gasturbine:
- der Verdichterwirkungsgrad der Gasturbine;
- der Turbinenwirkungsgrad der Gasturbine;
- die geregelte Abgastemperatur der Gasturbine;
- die Stellung einer oder mehrerer Leitschaufeln, insbesondere im Verdichter der Gasturbine;
- die Rotationsgeschwindigkeit der Gasturbine;
- eine oder mehrere Drücke und/oder Temperaturen in der Gasturbine, insbesondere die Eintritttemperatur und/oder der Eintrittsdruck und/oder die Austrittstemperatur und/oder der Austrittsdruck im Verdichter und/oder in der Turbine;
- die Temperatur in der Umgebung, in der die Gasturbine betrieben wird;
- die Luftfeuchtigkeit in der Umgebung, in der die Gasturbine betrieben wird;
- den Luftdruck in der Umgebung, in der die Gasturbine betrieben wird;
- ein oder mehrere Massen- und/oder Volumenströme;
- ein oder mehrere Parameter von einem Kühl- und/oder Hilfssystem und/oder Schmieröl- und/oder Lagersystemen in der Gasturbine, insbesondere die Stellung von einem oder mehreren Ventilen zur Zufuhr von Kühlluft;
- die Leistung der Gasturbine, insbesondere ein prozentualer Leistungswert;
- die Brennstoffgüte der Gasturbine;
- die Schadstoffemission der Gasturbine, insbesondere die Emission von Stickoxiden und/oder Kohlenmonoxid;
- die Temperatur einer oder mehrerer Turbinenschaufeln der Gasturbine;
- die Verbrennungsdynamik der Brennkammer der Gasturbine;
- die Menge an der Gasturbine zugeführtem Gas;
- Lager- und/oder Gehäuseschwingungen in der Gasturbine.

Die obigen Größen sind dem Fachmann hinlänglich bekannt und werden deshalb nicht im Detail erläutert. In einer besonders bevorzugten Ausführungsform wird dabei der Verdichtungsgrad der Gasturbine bzw. die geregelte Abgastemperatur der Gasturbine als Ausgangsgröße verwendet. In einer weiteren bevorzugten Ausführungsform werden als Eingangsgrößen die Stellung von Leitschaufeln im Verdichter, die Rotationsgeschwindigkeit der Gasturbine, die Umgebungsfeuchtigkeit, der Eintrittsdruck in den Verdichter, die Eintrittstemperatur in den Verdichter sowie ein Volumenstrom im Verdichter beim Einspritzen von Wasser verwendet. Die zuletzt genannte Eingangsgröße wird dabei auf Null gesetzt, wenn kein Wasser im Betrieb der Gasturbine eingespritzt wird.

Neben dem oben beschriebenen Verfahren betrifft die Erfindung ferner eine Vorrichtung zur rechnergestützten Überwachung des Betriebs eines technischen Systems und insbesondere einer elektrischen Energieerzeugungsanlage, wobei die Vorrichtung eine Rechnereinheit umfasst, welche derart ausgestaltet ist, dass mit der Rechnereinheit das erfindungsgemäße Verfahren bzw. eine oder mehrere bevorzugte Varianten des erfindungsgemäßen Verfahrens durchführbar sind.

Die Erfindung umfasst ferner ein technisches System, welches die oben beschriebene erfindungsgemäße Vorrichtung enthält.

Darüber hinaus betrifft die Erfindung ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Rechner ausgeführt wird.

Ausführungsbeispiele der Erfindung werden nachfolgend anhand der beigefügten Figuren detailliert beschrieben.

Es zeigen:
- Fig. 1: eine schematische Darstellung des Ablaufs einer Ausführungsform des erfindungsgemäßen Verfahrens;
- Fig. 2: ein Diagramm, welches die erfindungsgemäße Überwachung einer ungeregelten Betriebsgröße eines technischen Systems verdeutlicht; und
- Fig. 3: ein Diagramm, welches die erfindungsgemäße Überwachung einer geregelten Betriebsgröße eines technischen Systems verdeutlicht.

Nachfolgend wird eine Ausführungsform des erfindungsgemäßen Verfahrens in Bezug auf die Überwachung eines technischen Systems in der Form einer Gasturbine beschrieben. Nichtsdestotrotz ist das erfindungsgemäße Verfahren auch für beliebige andere technische Systeme bzw. elektrische Energieerzeugungsanlagen anwendbar, wie z.B. Dampfturbinen oder auch regenerative Energieerzeugungsanlagen, beispielsweise Windkraftanlagen. Mit dem erfindungsgemäßen Verfahren wird über rechnergestützte Methoden ein sog. Softsensor realisiert, mit dem Sollwerte entsprechender Prozessgrößen des technischen Systems ermittelt werden. Weichen diese Sollwerte stark von den tatsächlichen Prozessgrößen ab, wird eine entsprechende Warnung bzw. bei längerer Abweichung auch ein Alarm ausgegeben, wie nachfolgend näher beschrieben wird.

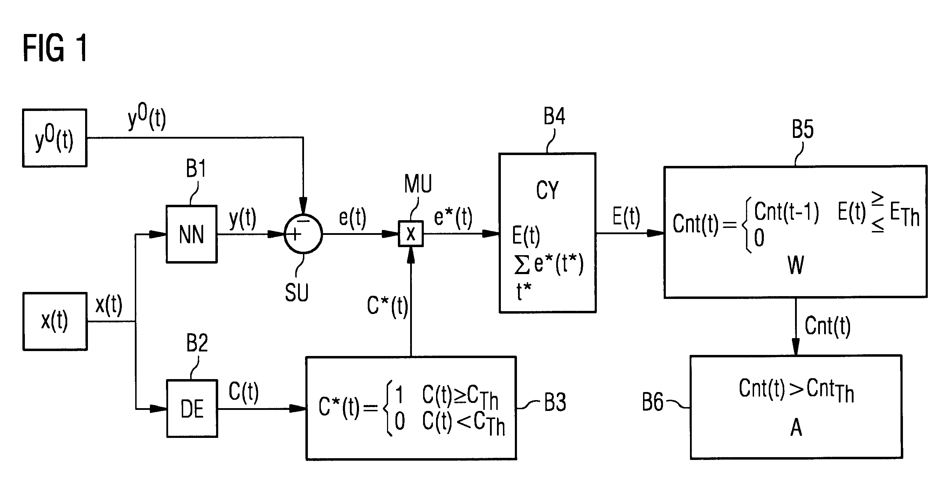

Gemäß dem Ablaufdiagramm der Fig. 1 wird für den entsprechenden Betriebszeitpunkt t der Gasturbine eine Anzahl von Eingangsgrößen verarbeitet, welche mit x(t) bezeichnet sind und eine oder mehrere Betriebsgrößen der Gasturbine betreffen. Darüber hinaus wird eine zum entsprechenden Betriebszeitpunkt in der Gasturbine berechnete oder gemessene Ausgangsgröße in der Form einer Zielgröße y⁰(t) verarbeitet. In einer Ausführungsform des erfindungsgemäßen Verfahrens, welche auch von den Erfindern getestet wurde, sind die Eingangsgrößen x(t) folgende Größen:
- die Position der Leitschaufeln im Verdichter der Gasturbine;
- die Umgebungsfeuchtigkeit um die Gasturbine;
- die Rotationsgeschwindigkeit der Turbine;
- der Einlassdruck des Verdichters der Gasturbine;
- die Einlasstemperatur des Verdichters der Gasturbine;
- der Massenfluss an Wasser, das in den Verdichter kommt, im Falle eines Betriebs der Gasturbine, bei dem Wasser in den Verdichter eingespritzt wird.

Als entsprechende Ausgangsgröße für die oben genannten Eingangsgrößen wurde dabei in einem Fall der Verdichterwirkungsgrad verwendet, der eine an sich bekannte Größe ist und aus entsprechenden Drücken und Temperaturen im Verdichter ermittelt werden kann. In einem anderen Fall wurde als Ausgangsgröße die Abgastemperatur (sog. OTC-Temperatur) der Turbine verwendet. Bei dieser Größe handelt es sich im Gegensatz zum Verdichterwirkungsgrad um eine im Betrieb der Turbine geregelte Größe, die möglichst auf einem konstanten Wert gehalten wird.

Die Eingangsgrößen x(t) werden in der Ausführungsform der Fig. 1 zum einen von einem datengetriebenen Modell in der Form eines neuronalen Netzes NN (Block B1) und zum anderen von einem Dichteschätzer DE (Block B2) verarbeitet. In das neuronale Netz NN können neben den Eingangsgrößen zum aktuellen Betriebszeitpunkt gegebenenfalls auch Eingangsgrößen zu weiter zurückliegenden Betriebszeitpunkten einfließen. Mit dem neuronalen Netz NN wird die entsprechende Ausgangsgröße y(t) prognostiziert, welche - wie oben erwähnt - z.B. den Verdichterwirkungsgrad oder die Abgastemperatur der Turbine darstellen kann. Es können dabei beliebige, aus dem Stand der Technik bekannte neuronale Netze zur Prognose der Größe y(t) verwendet werden, wie z.B. Multi-Layer-Perceptron-Netze, rekurrente neuronale Netze und dergleichen. Beispielsweise kann das in der Druckschrift [3] offenbarte neuronale Netz zur Prognose der Ausgangsgröße y(t) verwendet werden. Anstatt von neuronalen Netzen können zur Prognose der Ausgangsgröße y(t) gegebenenfalls auch andere Verfahren, wie z.B. Support Vector Machines oder Gauß-Prozesse eingesetzt werden.

Das neuronale Netz NN wurde im Vorfeld mit entsprechenden Trainingsdaten aus Zustandsvektoren umfassend die bekannten Eingangsgrößen und Ausgangsgrößen für verschiedene Betriebszeitpunkte trainiert. Der in Fig. 1 verwendete Dichteschützer DE gibt für die Eingangsgrößen x(t) zum aktuellen Betriebszeitpunkt ein Konfidenzmaß C(t) aus, welches wiedergibt, ob der entsprechende Vektor aus Eingangsgrößen in einem Bereich des Zustandsraums der Eingangsgrößen liegt, in dem viele Vektoren aus bekannten Eingangsgrößen der Trainingsdaten auftreten. Der Dichteschätzer wurde ebenfalls im Vorfeld mit den Trainingsdaten geeignet gelernt.

In einer besonders bevorzugten Ausführungsform wird als Dichteschätzer der Datenenkapsulator DE aus der Druckschrift [6] verwendet, der auf Neural Clouds beruht. Die Dichtschätzung basierend auf diesem Verfahren ist bekannt und wird deshalb nur grob skizziert. Ziel der Dichteschätzung ist es, für einen entsprechenden Datensatz bzw. Datenpunkt aus Eingangsgrößen zum entsprechenden Betriebszeitpunkt dessen "Neuigkeit" dahingehend zu ermitteln, inwieweit weitere Datensätze der Trainingsdaten ähnlich zu dem betrachteten Datensatz sind, wobei die Ähnlichkeit durch einen Abstand der Datensätze zueinander beschrieben wird. Dieser Abstand ist durch den euklidischen Abstand der Datenpunkte im Datenraum gegeben. Mit dem Dichteschätzer der Druckschrift [6] wird zunächst eine Normalisierung der einzelnen Datensätze bzw. Datenpunkte basierend auf einer Min-Max-Normalisierungs-Methode durchgeführt. Anschließend erfolgt eine Clusterung der Datenpunkte basierend auf einer Abwandlung des aus dem Stand der Technik bekannten K Means Algorithmus, der auch als "Advanced K Means" Algorithmus bezeichnet wird. Dieser Algorithmus liefert Clusterzentren in dem Raum der Datenpunkte. In einem nächsten Schritt werden Gaußsche Glocken über die Zentren gelegt, und anschließend erfolgt eine Normalisierung der Gaußschen Glocken. Als Endergebnis des Algorithmus erhält man dann einen gelernten Dichteschätzer, der für einen beliebigen Datensatz aus Eingangsgrößen eine Konfidenz ermittelt, welche die Ähnlichkeit des Datensatzes zu Datensätzen aus den Trainingsdaten repräsentiert und in der obigen Druckschrift [6] als Ausfallwahrscheinlichkeit für das betrachtete technische System gewertet wird.

In Fig. 1 wird über den Subtrahierer SU die Differenz zwischen der prognostizierten Ausgangsgröße y(t) und der tatsächlich aufgetretenen Ausgangsgröße y⁰(t) als vorzeichenbehaftete Abweichung bzw. Fehler e(t) bestimmt. Das über den Datenenkapsulator DE ermittelte Konfidenzmaß C(t), welches vorzugsweise zwischen 0 und 1 liegt (0 entspricht keiner Konfidenz und 1 einer sehr hohen Konfidenz) wird anschließend im Block B3 weiterverarbeitet. Dabei ist ein geeigneter Schwellwert C_{Th} vorgegeben, wobei Konfidenzmaßen unterhalb eines Schwellwerts C_{Th} der Wert 0 und Konfidenzmaßen, welche genauso groß oder größer als der Schwellwert sind, der Wert 1 zugeordnet wird. Es wird auf diese Weise ein gewichtetes Konfidenzmaß C*(t) bestimmt, welches entweder den Wert 0 oder den Wert 1 annimmt.

Über den Multiplikator MU wird schließlich das gewichtete Konfidenzmaß C*(t) mit dem Fehler e(t) für die jeweiligen Betriebszeitpunkte t multipliziert. Auf diese Weise wird ein gewichteter Fehler e*(t) erhalten, der im Falle eines hohen Konfidenzmaßes dem ursprünglichen Fehler e(t) entspricht und ansonsten den Wert 0 aufweist. In einem nächsten Schritt, der durch den Block B4 angedeutet ist, wird für entsprechende Zyklen CY aus einer vorbestimmten Anzahl von vergangenen Betriebszeitpunkten ein mittlerer gewichteter Fehler E(t) ermittelt. Dieser Fehler ist dabei die Summe aus den Fehlern e*(t) für die Betriebszeitpunkte in dem Zyklus CY, geteilt durch die Anzahl der Betriebszeitpunkte im Zyklus CY. Die Berechnung von E(t) ist in Fig. 1 über ein entsprechendes Summenzeichen angedeutet, wobei über die Anzahl von Zeitpunkten t* im entsprechenden Zyklus CY summiert wird. Zur Bestimmung von E(t) ist diese Summe noch durch die Anzahl von Betriebszeitpunkten im Zyklus zu teilen.

Der gemittelte gewichtete Fehler E(t) stellt somit den mittleren Fehler zwischen prognostizierter und tatsächlicher Ausgangsgröße unter Berücksichtigung der über den Datenenkapsulator DE ausgegebenen Konfidenzen C(t) dar. Überschreitet die Konfidenz ein bestimmtes Maß, wird der entsprechenden Prognose vertraut und diese in der Berechnung des mittleren Fehlers berücksichtigt. Ansonsten wird die entsprechende Prognose verworfen. In Abwandlungen des erfindungsgemäßen Verfahrens kann anstatt einer harten Schwelle C_{Th} auch eine Funktion verwendet werden, gemäß der entsprechende Fehler e(t) stärker oder weniger stark bei der Berechnung des mittleren gewichteten Fehlers E(t) einfließen. Insbesondere kann gegebenenfalls die Konfidenz C(t) selbst als Gewichtungsfaktor für den entsprechenden Fehler e(t) in der gewichteten Summe der Fehler einfließen. Die Schwelle C_{Th} kann je nach Ausgestaltung des Verfahrens verschieden gewählt werden. In einer bevorzugten Ausführungsform hat sich ein Wert von C_{Th} bei 0,95 für praktikabel erwiesen.

Die in den entsprechenden Zyklen CY ermittelten Fehler E(t) werden schließlich in dem Block B5 der Fig. 1 weiterverarbeitet. Dort wird ermittelt, ob der Fehler E(t) eine vorbestimmte Schwelle überschreitet oder unterschreitet. Ob ein Überschreiten oder Unterschreiten des Fehlers detektiert wird, hängt davon ab, ob Abweichungen detektiert werden sollen, bei denen die Zielgröße kleiner oder größer als die prognostizierte Größe ist. Im Falle einer Zielgröße in der Form des Verdichterwirkungsgrads werden z.B. nur solche Abweichungen als kritisch erachtet, bei denen der tatsächlich bestimmte Verdichterwirkungsgrad y⁰(t) kleiner ist als der prognostizierte Verdichterwirkungsgrad, da dies auf eine Fehlfunktion in der Gasturbine hindeutet, die langfristig zu dem Totalausfall der Turbine führen kann. Nichtsdestotrotz sind im erfindungsgemäßen Verfahren auch Ausführungsbeispiele möglich, bei denen sowohl eine positive als auch eine negative Abweichung zwischen Zielgröße und prognostizierter Größe als kritisch eingestuft wird. In diesem Fall wird im Block B5 ermittelt, ob der Betrag des mittleren Fehlers E(t) einen entsprechenden (positiven) Schwellwert E_{Th} überschreitet.

Wird im Block B5 nunmehr festgestellt, dass ein Überschreiten bzw. Unterschreiten des Schwellwerts E_{Th} für den entsprechenden Zyklus CY vorliegt, wird ein Zähler Cnt von seinem aktuellen Zählwert Cnt(t-1) um 1 auf den neuen Zählwert Cnt(t) erhöht. Liegt demgegenüber kein Überschreiten bzw. Unterschreiten des Schwellwerts E_{Th} vor, wird der Zähler auf 0 zurückgesetzt. Beim Überschreiten bzw. Unterschreiten des Schwellwerts wird darüber hinaus eine entsprechende Warnung W ausgegeben. Zum Beispiel kann über eine Benutzerschnittstelle in einem Leitsystem zur Überwachung der Gasturbine ein akustisches Signal ausgegeben werden. Ferner besteht auch die Möglichkeit, eine entsprechende SMS bzw. E-Mail an das Leitsystem bzw. für den Betrieb der Gasturbine verantwortliche Stellen oder Personen zu senden. Gegebenenfalls kann die Art der Warnung daran gekoppelt sein, wie hoch der Wert des Zählers Cnt ist. Es können auf diese Weise verschiedene Warnstufen festgelegt werden. Zum Beispiel kann bei einer niedrigen Warnstufe lediglich ein akustisches Signal ausgegeben werden, wohingegen bei höheren Warnstufen zunächst eine SMS und schließlich eine E-Mail verschickt wird.

Der aktuelle Zählwert Cnt(t) wird ferner im Block B6 verarbeitet. Dort wird überprüft, ob der Zählwert oberhalb einer vorgegebenen Zahlenschwelle Cnt_{Th} liegt. Ist dies der Fall, d.h. tritt schon seit längerer Zeit eine Abweichung zwischen prognostizierter und tatsächlicher Ausgangsgröße auf, wird schließlich ein Alarm A ausgegeben, der je nach Ausführungsform des erfindungsgemäßen Verfahrens unterschiedlich ausgestaltet sein kann. Insbesondere kann bei einem Alarm - analog zur Warnung - ein Signal ausgegeben werden oder eine SMS bzw. E-Mail versendet werden. Vorzugsweise sind an den Alarm jedoch auch automatische Sicherungsmaßnahmen des Leitsystems geknüpft. Zum Beispiel kann eine Teilentlastung der Gasturbine oder eine vollständige Entlastung der Gasturbine durch entsprechende Steuerung des Generators der Turbine erfolgen und gegebenenfalls auch ein Anhalten der Turbine durchgeführt werden. Gegebenenfalls können analog zu den Warnungen auch verschiedene Alarmstufen in Abhängigkeit davon festgelegt werden, wie hoch der Zählwert ist.

Die Festlegung des obigen Schwellwerts E_{Th} für die gemittelte gewichtete Abweichung erfolgt in einer bevorzugten Ausführungsform der Erfindung basierend auf Validierungsdaten, welche bekannte Zustandsvektoren aus Eingangsgrößen und der Ausgangsgröße darstellen, die jedoch nicht zum Lernen des neuronalen Netzes bzw. des Datenenkapsulators verwendet wurden. Dabei wird die Streuung der Abweichungen zwischen einer über das gelernte neuronale Netz bestimmten Ausgangsgröße, die mittels entsprechender Eingangsgrößen aus den Validierungsdaten ermittelt wurde, und der entsprechenden Ausgangsgröße aus den Validierungsdaten bestimmt. Vorzugsweise wird die Streuung durch die Standardabweichung der Häufigkeitsverteilung dieser Abweichungen repräsentiert. Je größer die Standardabweichung ist, desto höher wird die Schwelle E_{Th} gesetzt, um hierdurch Fehlalarme zu vermeiden, die aus einer starken Streuung zwischen prognostizierter und tatsächlicher Ausgangsgröße resultieren. In einer besonders bevorzugten Ausführungsform entspricht die Schwelle E_{Th} dem Produkt aus der Standardabweichung und einem Faktor, der vom betrachteten technischen System bzw. vom verwendeten datengetriebenen Modell abhängt. Im Falle, dass als Ausgangsgröße der Verdichterwirkungsgrad analysiert wird, hat sich ein Faktor mit dem Wert 3,5 als praktikabel erwiesen. Vorzugsweise wird auch die Zahlenschwelle Cnt_{Th} in Abhängigkeit von diesem Faktor eingestellt. Zum Beispiel kann die Zahlenschwelle auf den doppelten Wert des Maximalwertes des Zählwertes Cnt(t), der bei der Auswertung der Validierungsdaten unter der Nutzung des zuvor bestimmten Schwellwertes E_{Th} erreicht wird, festgelegt werden.

Das anhand von Fig. 1 beschriebene Überwachungsverfahren kann zur Verarbeitung beliebiger Prozessführungs- und Vergleichsgrößen technischer Systeme und insbesondere von fossil befeuerten Wärmekraftwerken und deren Komponenten eingesetzt werden. Wie bereits oben erwähnt, kann dabei z.B. der Verdichterwirkungsgrad als überwachte Ausgangsgröße verwendet werden. Der Verdichterwirkungsgrad ist eine sehr wichtige virtuelle Prozessgröße, die die Zustandsqualität des Verdichters der Gasturbine sehr gut widerspiegelt und einen sehr empfindlichen Indikator für Schädigungen oder andere negative Beeinträchtigungen der Gasturbine darstellt. Allerdings unterliegt der Verdichterwirkungsgrad einer Reihe von Einflüssen, z.B. Umgebungsbedingungen oder dem Lastzustand der Gasturbine, so dass dieser Wirkungsgrad grundsätzlich in einem großen zulässigen Wertebereich liegen kann. Mit dem erfindungsgemäßen Verfahren wird nunmehr jedoch in Abhängigkeit von den Betriebsbedingungen ein geeigneter Sollwert dieses Verdichterwirkungsgrads ermittelt, auf dessen Basis dann Fehlfunktionen der Gasturbine rechtzeitig vor einem Totalausfall der Turbine festgestellt werden können.

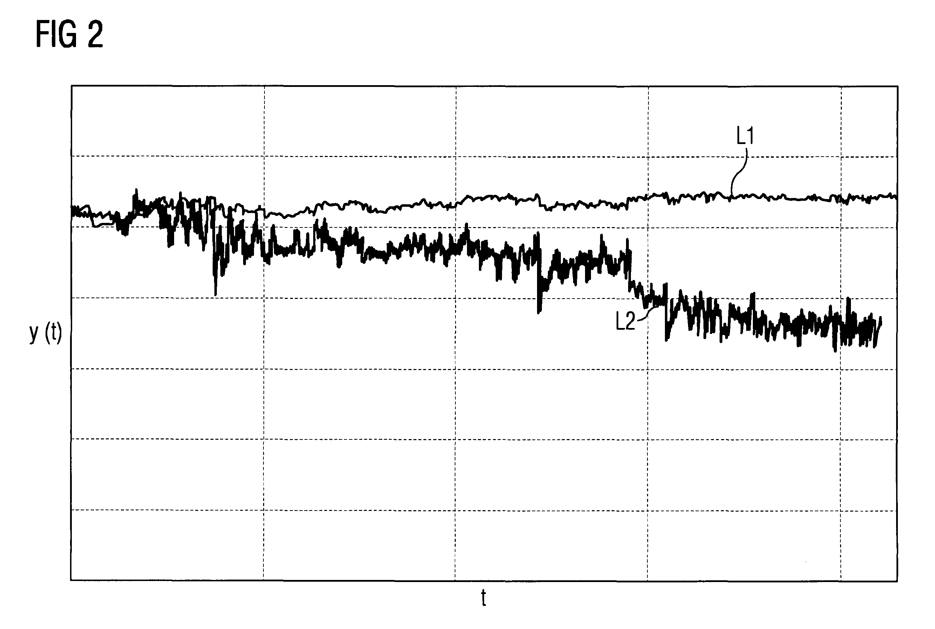

Das Diagramm der Fig. 2 zeigt eine mit dem erfindungsgemäßen Verfahren durchgeführte Prognose einer ungeregelten Ausgangsgröße y(t), bei der es sich z.B. um den oben beschriebenen Verdichterwirkungsgrad handeln kann. Entlang der Abszisse sind die entsprechenden Betriebszeitpunkte t und entlang der Ordinate die Ausgangsgröße y(t) aufgetragen. Die Linie L1 beschreibt die prognostizierten Ausgangsgrößen und die Linie L2 die tatsächlich aufgetretenen Ausgangsgrößen. Wie man erkennt, gibt das Szenario der Fig. 2 wieder, dass die tatsächliche Ausgangsgröße kontinuierlich kleiner wird als die entsprechende Prognose. Mit dem erfindungsgemäßen Verfahren kann nunmehr im Falle, dass die prognostizierte Ausgangsgröße über einen längeren Zeitraum hinweg um mindestens einen vorbestimmten Wert größer als die tatsächliche Ausgangsgröße ist, ein entsprechender Alarm ausgegeben werden.

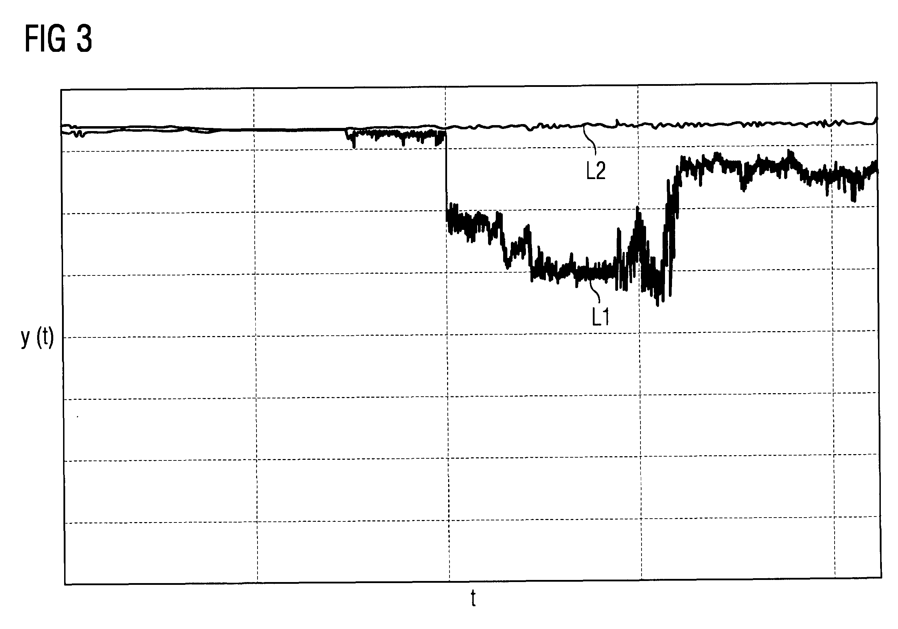

Fig. 3 zeigt ein Diagramm analog zu Fig. 2, wobei nunmehr eine geregelte Ausgangsgröße verarbeitet wird, welche im Betrieb der Gasturbine konstant gehalten wird. Eine solche Ausgangsgröße ist beispielsweise die Abgastemperatur der Turbine, die üblicherweise auf einen konstanten Wert geregelt wird. Demzufolge eignet sich die Abgastemperatur herkömmlicherweise nicht als ein Indikator für eine Fehlfunktion der Gasturbine. Erfindungsgemäß kann eine solche geregelte Größe dennoch zur Zustandsüberwachung der Gasturbine verwendet werden, denn diese Größe wird mit einem prognostizierten Sollwert verglichen, wobei bei größeren Abweichungen wiederum ein Alarm ausgegeben wird. In dem Szenario der Fig. 3 ist die zeitliche Entwicklung der prognostizierten Ausgangsgröße durch die Linie L1 und der geregelten Ausgangsgröße durch die Linie L2 angedeutet. Aufgrund der Regelung der Ausgangsgröße repräsentiert die Linie L2 im Wesentlichen einen konstanten Wert. Nichtsdestotrotz tritt für den prognostizierten Wert gemäß der Linie L1 zum Teil eine erhebliche Abweichung von dem geregelten Wert auf. In einem solchen Fall kann ein entsprechender Alarm ausgegeben werden.

Das erfindungsgemäße Verfahren wird vorrangig auf reale und virtuelle Prozessparameter für Zielgruppen einer elektrischen Energieerzeugungsanlage angewendet. Zielbaugruppen stellen insbesondere die Maschinengattungen Gasturbine, Dampfturbine, Kessel, Generator und Hilfssysteme dar. Die erfindungsgemäße Überwachung erfolgt dabei vorzugsweise basierend auf thermodynamischen Erfolgsgrößen, wie Temperaturen, Drücken, Massenund Volumenströmen, Wirkungsgraden und dergleichen. Aber auch nicht-thermodynamische deterministische Prozesse, wie z.B. das Schwingungsverhalten der Zielbaugruppen, können einbezogen werden. Bei einer Gasturbine können als Prozessparameter in Bezug auf den Verdichter insbesondere der Verdichterwirkungsgrad und der Verdichterluftmassenstrom eingesetzt werden. Für die dem Verdichter nachgeschaltete Turbine können als Prozessgrößen z.B. der Turbinenwirkungsgrad bzw. Turbineneintrittstemperaturen betrachtet werden. Für die Brennkammer der Gasturbine können als Prozessparameter die Brennkammerdynamik (d.h. das Brennkammerbrummen), die Emissionen der Gasturbine und dergleichen herangezogen werden. Darüber hinaus können als Prozessparameter horizontale und vertikale Lager- und Gehäuseschwingungen (Mittelwerte der Amplituden der entsprechenden Harmonischen) verwendet werden. In Bezug auf Kühl- oder Hilfssysteme der Gasturbine kommen insbesondere die Brennstoffversorgung mit Ventilstellung, Drücken und Temperaturen in Betracht. Ebenso können für das Schmieröl- und Lagersystem der Turbine entsprechende Drücke, Temperaturen und Volumenströme als Prozessgrößen einfließen.

Die im Vorangegangenen beschriebenen Ausführungsformen der Erfindung weisen eine Reihe von Vorteilen auf. Insbesondere kann mittels der Softsensor-Technologie unter Verwendung eines datengetriebenen Modells in Kombination mit einem Dichteschätzer eine zuverlässige Überwachung eines technischen Systems erreicht werden, ohne dass eine analytische Prozessmodellierung für entsprechende Prozessausgangsparameter erforderlich ist. Es müssen lediglich Eingangsparameter ermittelt werden oder bekannt sein, die wesentlichen kausalen Einfluss auf die Ausgangsparameter haben. Die entsprechenden Eingangsparameter können mit den eingangs erwähnten Verfahren aus den Druckschriften [1] und [2] bzw. basierend auf Expertenwissen bestimmt werden.

Es entfallen die sehr hohen finanziellen und personellen Ressourcen für die Prozessmodellierung fast vollständig. Es verbleibt lediglich der Parametrieraufwand für den Softsensor selbst, der sich aber im Wesentlichen nur auf die Benennung oder Überprüfung der Prozesseingangsgrößen beschränkt. Zusätzlich ist ein moderater Zeitaufwand zur Bereitstellung der Lerndaten und deren Einlesen erforderlich, sofern dies nicht automatisiert im Hintergrund erfolgt. Der Zeitaufwand für die Datenbereitstellung ist dabei nur einmalig erforderlich. Der Zeitaufwand für die gesamte Trainingsphase ist sehr gut kalkulierbar und beträgt im Allgemeinen weniger als einen Mannmonat. Bei der Anwendung für ein Kraftwerk können die während der Inbetriebnahmephase angefallenen Daten für das Erstanlernen verwendet werden. Danach kann die Selektionsschärfe in dem Maß gesteigert werden, wie die Lernadaption fortschreitet. Bei einer Einbettung des Verfahrens in eine bestehende Anlageninfrastruktur kann die adaptive Trainingsphase voll automatisiert werden und erfordert keine personellen Ressourcen.

Im Rahmen des erfindungsgemäßen Verfahrens können Sollwerte für solche Prozessgrößen bereitgestellt werden, die bisher durch eine analytische Prozessmodellierung nicht zugänglich waren, da die Erstellung entsprechender Modelle z.B. zu aufwändig war oder durch den aktuellen Wissensstand nicht abgedeckt war. Ferner ermöglicht das erfindungsgemäße Verfahren die Anwendung der Softsensor-Technologie auf geregelte Prozessgrößen, die im Betrieb des technischen Systems auf einem konstanten Wert gehalten werden. Viele Prozessgrößen in einem technischen Systems werden als Zielparameter durch geschlossene Regelkreise einem Sollwert nachgeführt. Solange die Stellreserve ausreichend ist, können Störungen im technischen System ausgeregelt werden und die geregelte Zielgröße bleibt konstant. Speziell bei mehrkanaligen Regelsystemen, die von vielen Eingangsgrößen abhängen, sind sehr unterschiedliche Szenarien denkbar, die zu einem Reglereingriff führen können. Mit dem erfindungsgemäßen Verfahren können nunmehr über die Prognose der entsprechenden geregelten Größe auch Reglereingriffe festgestellt werden, die auf anbahnende Schädigungen des technischen Systems hindeuten.

### Literaturverzeichnis:

[1] WO 2005/033809 A1
[2] WO 2005/081076 A2
[3] Deutsche Patentanmeldung Nr. 10 2011 081 197.4
[4] WO 2009/053183 A2
[5] Internationale Patentanmeldung Nr. PCT/EP2012/060400
[6] B. Lang et al., Neural Clouds for Monitoring of Complex Systems, Optical Memory and Neural Networks (Information Optics), 2008, Vol. 17, No. 3, S. 183-192
[7] D. Juricic et al: "FAULT DETECTION BASED ON GAUSSIAN PROCESS MODELS", Proceedings 5th MATHOMOD Vienna, 1. Februar 2006, Seiten 1 bis 10
[8] Enrico Zio et al: "Confidence in signal reconstruction by the Evolving Clustering Method", PROGNOSTICS AND SYSTEM HEALTH MANAGEMENT CONFERENCE (PHM-SHENZHEN), 2011, IEEE, 24. Mai 2011

## Patentansprüche

1. Verfahren zur rechnergestützten Überwachung des Betriebs eines technischen Systems, insbesondere einer elektrischen Energieerzeugungsanlage, wobei das technische System zu entsprechenden Betriebzeitpunkten (t) durch einen Zustandsvektor aus einer Anzahl von Eingangsgrößen (x(t)) und zumindest einer zu überwachenden Ausgangsgröße (y(t)) charakterisiert ist, wobei:
a) für jeweilige Betriebszeitpunkte (t) die zumindest eine Ausgangsgröße (y(t)) basierend auf im Betrieb des technischen Systems aufgetretenen Eingangsgrößen (x(t)) mit einem datengetriebenen Modell (NN), das mittels Trainingsdaten aus bekannten Zustandsvektoren gelernt ist, prognostiziert wird;
b) für jeweilige Betriebszeitpunkte ein oder mehrere Dichteschätzer (DE), welche mittels bekannten Eingangsgrößen (x(t)) der Trainingsdaten gelernt sind, auf die Anzahl von Eingangsgrößen (x(t)) zum entsprechenden Betriebszeitpunkt (t) angewendet werden, wodurch ein Konfidenzmaß (C(t)) bestimmt wird, welches umso höher ist, je größer die Ähnlichkeit der Anzahl von Eingangsgrößen (x(t)) zum entsprechenden Betriebszeitpunkt (t) zu bekannten Eingangsgrößen (x(t)) aus den Trainingsdaten ist;
**dadurch gekennzeichnet, dass**
c) für jeweilige Zyklen (CY) aus mehreren aufeinander folgenden Betriebszeitpunkten (t) eine über die Anzahl der Zustandsvektoren im jeweiligen Zyklus (CY) gemittelte gewichtete Abweichung (E(t)) zwischen der zumindest einen prognostizierten Ausgangsgröße (y(t)) und der zumindest einen, im Betrieb des technischen Systems aufgetretenen Ausgangsgröße (y⁰(t)) bestimmt wird, wobei in der gemittelten gewichteten Abweichung Zustandsvektoren, deren Anzahl von Eingangsgrößen geringe Konfidenzmaße (C(t)) aufweisen, weniger gewichtet sind;
d) ein Fehlbetrieb des technischen Systems festgestellt wird, falls alle gemittelten gewichteten Abweichungen (E(t)) für eine Anzahl von aufeinander folgenden Zyklen (CY), welche größer als eine vorbestimmte Zahlenschwelle (Cnt_{Th}) ist, ein oder mehrere Kriterien umfassend das Kriterium erfüllen, dass sie betragsmäßig einen vorgegebenen Schwellwert (E_{Th}) überschreiten.

2. Verfahren nach Anspruch 1, bei dem in Schritt d) ein Fehlbetrieb festgestellt wird, falls alle gemittelten gewichteten Abweichungen (E(t)) für eine Anzahl von aufeinander folgenden Zyklen (CY), welche größer als die vorbestimmte Zahlenschwelle (Cnt_{Th}) ist, das weitere Kriterium erfüllen, dass sie prognostizierten Ausgangsgrößen (y(t)) entsprechen, welche immer kleiner oder immer größer als die entsprechenden, im Betrieb des technischen Systems aufgetretenen Ausgangsgrößen (y⁰(t)) sind.

3. Verfahren nach Anspruch 1 oder 2, bei dem ein Alarm ausgegeben wird und/oder eine oder mehrere Sicherungsmaßnahmen zum Schutz des technischen Systems eingeleitet werden, wenn ein Fehlbetrieb des technischen Systems festgestellt wird.

4. Verfahren nach einem der vorhergehenden Ansprüche, bei dem die zumindest eine Ausgangsgröße (y(t)) eine Messgröße im technischen System umfasst und/oder aus einer oder mehreren Messgrößen im technischen System ermittelt ist und/oder eine im Betrieb des technischen Systems geregelte Größe ist.

5. Verfahren nach einem der vorhergehenden Ansprüche, bei dem die Anzahl von Eingangsgrößen (x(t)), welche in einem jeweiligen Zustandsvektor enthalten sind, basierend auf einem trainierbaren statistischen Modell und/oder Expertenwissen festgelegt sind.

6. Verfahren nach einem der vorhergehenden Ansprüche, bei dem das datengetriebene Modell (NN) auf einem neuronalen Netz, insbesondere einem rekurrenten neuronalen Netz, und/oder Support Vector Machines und/oder Gaußschen Prozessen basiert.

7. Verfahren nach einem der vorhergehenden Ansprüche, bei dem der oder die Dichteschätzer (DE) auf einem Neural Clouds Algorithmus basieren.

8. Verfahren nach einem der vorhergehenden Ansprüche, bei dem die gemittelte gewichtete Abweichung (E(t)) derart bestimmt wird, dass in der gemittelten gewichteten Abweichung (E(t)) nur Zustandsvektoren berücksichtigt werden, deren Anzahl von Eingangsgrößen (x(t)) Konfidenzmaße (C(t)) oberhalb einer Konfidenzschwelle (C_{Th}) aufweisen, wobei die in der mittleren gewichteten Abweichung (E(t)) berücksichtigten Zustandsvektoren vorzugsweise gleich stark gewichtet sind.

9. Verfahren nach einem der vorhergehenden Ansprüche, bei dem der vorgegebene Schwellwert (E_{Th}) mittels Validierungsdaten umfassend bekannte Zustandsvektoren zu entsprechenden Betriebszeitpunkten (t) festgelegt wird, wobei für jeweilige Betriebszeitpunkte (t) aus den Validierungsdaten die Streuung der Abweichungen zwischen der zumindest einen Ausgangsgröße (y(t)), welche mit dem gelernten datengetriebenen Modell (NN) basierend auf Eingangsgrößen (x(t)) aus den Validierungsdaten prognostiziert wird, und der zumindest einen Ausgangsgröße (y⁰(t)) bestimmt wird, welche in dem Zustandsvektor (x(t)) der Validierungsdaten zum entsprechenden Betriebszeitpunkt (t) enthalten ist, wobei aus der Streuung der Abweichungen der vorgegebene Schwellwert (E_{Th}) derart bestimmt wird, dass der vorgegebenen Schwellwert (E_{Th}) umso größer ist, je größer die Streuung ist.

10. Verfahren nach Anspruch 9, bei dem die Streuung durch die Standardabweichung oder Varianz der Häufigkeitsverteilung der mittels der Validierungsdaten ermittelten Abweichungen repräsentiert wird oder von Standardabweichung oder Varianz abhängt, wobei der vorgegebene Schwellwert (E_{Th}) vorzugsweise die Standardabweichung oder Varianz multipliziert mit einem positiven Faktor darstellt.

11. Verfahren nach einem der vorhergehenden Ansprüche, bei dem in Schritt d) jedes Mal, wenn die gemittelte gewichtete Abweichung (E(t)) für einen Zyklus (CY) das oder die Kriterien umfassend das Kriterium erfüllt, dass sie betragsmäßig einen vorgegebenen Schwellwert (E_{Th}) überschreitet, ein Zähler (Cnt(t)) weitergezählt wird, wobei bei jedem Weiterzählen des Zählers (Cnt(t)) eine Warnung (W) ausgegeben wird und ferner dann ein Fehlbetrieb des technischen Systems festgestellt wird, wenn das Weiterzählen des Zählers ergibt, dass die Anzahl der zeitlich aufeinander folgenden Zyklen (CY) größer als die vorbestimmte Zahlenschwelle (Cnt_{Th}) ist, wobei der Zähler (Cnt(t)) auf einen Initialwert zurückgesetzt wird, wenn die gemittelte gewichtete Abweichung (E(t)) das oder die Kriterien nicht erfüllt.

12. Verfahren nach Anspruch 11, **dadurch gekennzeichnet, dass** verschiedene Arten von Warnungen (W) in Abhängigkeit davon ausgegeben werden, in wie viel aufeinander folgenden Zyklen (CY) seit Zurücksetzen des Zählers (Cnt(t)) die gemittelten gewichteten Abweichungen (E(t)) das oder die Kriterien erfüllen.

13. Verfahren nach einem der vorhergehenden Ansprüche in Kombination mit Anspruch 3 oder 11 oder 12, bei dem die Warnung (W) und/oder der Alarm die Ausgabe eines Signals und/oder das Versenden einer Nachricht umfasst.

14. Verfahren nach einem der vorhergehenden Ansprüche, bei dem ein Lernen des datengetriebenen Modells (NN) und/oder des oder der Dichteschätzer (DE) in vorbestimmten Zeitabständen mit im Laufe des Betriebs des technischen Systems neu hinzugekommenen Zustandsvektoren als Trainingsdaten wiederholt wird.

15. Verfahren nach einem der vorhergehenden Ansprüche, bei dem der Betrieb einer elektrischen Energieerzeugungsanlage umfassend eine Gasturbine überwacht wird.

16. Verfahren nach Anspruch 15, bei dem die Anzahl von Eingangsgrößen und/oder die zumindest eine Ausgangsgröße eine oder mehrere der folgenden Größen der Gasturbine umfassen:
- der Verdichterwirkungsgrad der Gasturbine;
- der Turbinenwirkungsgrad der Gasturbine;
- die geregelte Abgastemperatur der Gasturbine;
- die Stellung einer oder mehrerer Leitschaufeln, insbesondere im Verdichter der Gasturbine;
- die Rotationsgeschwindigkeit der Gasturbine;
- eine oder mehrere Drücke und/oder Temperaturen in der Gasturbine, insbesondere die Eintritttemperatur und/oder der Eintrittsdruck und/oder die Austrittstemperatur und/oder der Austrittsdruck im Verdichter und/oder in der Turbine;
- die Temperatur in der Umgebung, in der die Gasturbine betrieben wird;
- die Luftfeuchtigkeit in der Umgebung, in der die Gasturbine betrieben wird;
- den Luftdruck in der Umgebung, in der die Gasturbine betrieben wird;
- ein oder mehrere Massen- und/oder Volumenströme;
- ein oder mehrere Parameter von einem Kühl- und/oder Hilfssystem und/oder Schmieröl- und/oder Lagersystemen in der Gasturbine, insbesondere die Stellung von einem oder mehreren Ventilen zur Zufuhr von Kühlluft;
- die Leistung der Gasturbine, insbesondere ein prozentualer Leistungswert;
- die Brennstoffgüte der Gasturbine;
- die Schadstoffemission der Gasturbine, insbesondere die Emission von Stickoxiden und/oder Kohlenmonoxid;
- die Temperatur einer oder mehrerer Turbinenschaufeln der Gasturbine;
- die Verbrennungsdynamik der Brennkammer der Gasturbine;
- die Menge an der Gasturbine zugeführtem Gas;
- Lager- und/oder Gehäuseschwingungen in der Gasturbine.

17. Vorrichtung zur rechnergestützten Überwachung des Betriebs eines technischen Systems, insbesondere einer elektrischen Energieerzeugungsanlage, wobei die Vorrichtung eine Rechnereinheit umfasst, welche dazu eingerichtet ist, ein Verfahren nach einem der vorhergehenden Ansprüche durchzuführen.

18. Technisches System, umfassend die Vorrichtung gemäß Anspruch 17.

19. Computerprogrammprodukt mit einem auf einem maschinenlesbaren Träger gespeicherten Programmcode zur Durchführung des Verfahrens nach einem der Ansprüche 1 bis 16, wenn der Programmcode auf einem Rechner ausgeführt wird.

## Claims

1. Method for the computer-assisted monitoring of the operation of a technical system, particularly of an electrical energy-generating installation, wherein the technical system is characterized at corresponding operating times (t) by a state vector comprising a number of input variables (x(t)) and at least one output variable (y(t)) which is to be monitored, wherein:
a) the at least one output variable (y(t)) is predicted for respective operating times (t) on the basis of input variables occurring in the operation of the technical system with a data-driven model (NN) which is trained by means of training data from known state vectors;
b) one or more density estimators (DE), which are trained by means of known input variables (x(t)) of the training data, are applied for respective operating times (t) to the number of input variables (x(t)) at the corresponding operating time (t), whereby a confidence measure (C(t)) is defined which is higher the greater the similarity of the input variables (x(t)) at the corresponding operating time (t) to known input variables (x(t)) from the training data;
**characterized in that**
c) for respective cycles (CY) from a plurality of consecutive operating times (t), a weighted deviation (E(t)), averaged over the number of state vectors in the respective cycle (CY), between the at least one predicted output variable (y(t)) and the at least one output variable (y⁰(t)) occurring in the operation of the technical system is defined, wherein state vectors whose number of input variables have low confidence measures (C(t)) are weighted less in the average weighted deviation;
d) a malfunction of the technical system is detected if all average weighted deviations (E(t)), for a number of consecutive cycles (CY) which is greater than a predefined numerical threshold (Cnt_{Th}), comprising one or more criteria, fulfil the criterion that the amount of these deviations exceeds a predefined threshold value (E_{Th}).

2. Method according to Claim 1, in which a malfunction is detected in step d) if all average weighted deviations (E(t)) for a number of consecutive cycles (CY), which is greater than the predefined numerical threshold (Cnt_{Th}), fulfil the further criterion that they correspond to predicted output variables (y(t)) which are always smaller or always greater than the corresponding output variables (y⁰(t)) occurring in the operation of the technical system.

3. Method according to Claim 1 or 2, in which an alarm is output and/or one or more precautionary measures are instigated to protect the technical system if a malfunction of the technical system is detected.

4. Method according to one of the preceding claims, in which the at least one output variable (y(t)) comprises a measurement variable in the technical system and/or is determined from one or more measurement variables in the technical system and/or is a variable regulated in the operation of the system.

5. Method according to one of the preceding claims, in which the number of input variables (x(t)) contained in a respective state vector is defined on the basis of a trainable statistical model.

6. Method according to one of the preceding claims, in which the data-driven model (NN) is based on a neural network, in particular a recurrent neural network, and/or support vector machines and/or Gaussian processes.

7. Method according to one of the preceding claims, in which the density estimator(s) (DE) is/are based on a neural clouds algorithm.

8. Method according to one of the preceding claims, in which the average weighted deviation (E(t)) is defined in such a way that only state vectors whose number of input variables (x(t)) have confidence measures (C(t)) above a confidence threshold (C_{Th}) are taken into account in the average weighted deviation (E(t)), wherein the state vectors taken into account in the average weighted deviation (E(t)) are preferably equally heavily weighted.

9. Method according to one of the preceding claims, in which the predefined threshold value (E_{Th}) is defined by means of validation data comprising known state vectors at corresponding operating times (t), wherein the scatter of the deviations between the at least one output variable (y(t)), which is predicted with the trained data-driven model (NN) on the basis of input variables (x(t)) from the validation data, and the at least one input variable (y⁰(t)) which is contained in the state vector (x(t)) of the validation data at the corresponding operating time (t) is defined from the validation data for respective operating times, wherein the predefined threshold (E_{Th}) is determined from the scatter of the deviations in such a way that the predefined threshold (E_{Th}) is greater, the greater the scatter is.

10. Method according to Claim 9, in which the scatter is represented by the standard deviation or variance of the frequency distribution of the deviations determined by means of the validation data, or depends on the standard deviation or the variance, wherein the predefined threshold value (E_{Th}) preferably represents the standard deviation or variance multiplied by a positive factor.

11. Method according to one of the preceding claims, in which a counter (Cnt(t)) is incremented in step d) whenever the average weighted deviation (E(t)) fulfils the criterion or criteria comprising the criterion that its amount exceeds a predefined threshold value (E_{Th}) for a cycle (CY), wherein, with each incrementation of the counter (Cnt(t)), a warning (W) is output and a malfunction of the technical system is furthermore detected if the incrementation of the counter indicates that the number of temporally consecutive cycles (CY) is greater than the predefined numerical threshold (Cnt_{Th}), wherein the counter (Cnt(t)) is reset to an initial value if the average weighted deviation (E(t)) does not fulfil the criterion or criteria.

12. Method according to one of the preceding claims, in which different types of warning (W) are output depending on the number of consecutive cycles (CY) since the resetting of the counter (Cnt(t)) in which the average weighted deviations (E(t)) fulfil the criterion or criteria.

13. Method according to one of the preceding claims in combination with Claim 3 or 11 or 12, in which the warning (W) and/or the alarm comprises the output of a signal and/or the sending of a message.

14. Method according to one of the preceding claims, in which a training of the data-driven model (NN) and/or the density estimator(s) (DE) is repeated at predefined time intervals with state vectors newly added as training data during the operation of the technical system.

15. Method according to one of the preceding claims, in which the operation of an electrical energy-generating installation comprising a gas turbine is monitored.

16. Method according to Claim 15, in which the number of input variables and/or the at least one output variable comprise one or more of the following variables of the gas turbine:
- the compressor efficiency of the gas turbine;
- the turbine efficiency of the gas turbine;
- the regulated exhaust gas of the gas turbine;
- the setting of one or more guide vanes, particularly in the gas turbine compressor;
- the rotational speed of the gas turbine;
- one or more pressures and/or temperatures in the gas turbine, in particular the inlet temperature and/or the inlet pressure and/or the outlet temperature and/or the outlet pressure in the compressor and/or in the turbine;
- the temperature in the environment in which the gas turbine is operated;
- the relative humidity in the environment in which the gas turbine is operated;
- the air pressure in the environment in which the gas turbine is operated;
- one or more mass and/or volume flows;
- one or more parameters of a cooling and/or auxiliary system and/or lubricating oil and/or bearing systems in the gas turbine, in particular the setting of one or more valves for the supply of cooling air;
- the performance of the gas turbine, in particular a percentage performance value;
- the fuel quality of the gas turbine;
- the pollutant emission of the gas turbine, in particular the emission of nitrogen oxides and/or carbon monoxide;
- the temperature of one or more turbine vanes of the gas turbine;
- the combustion dynamics of the combustion chamber of the gas turbine;
- the quantity of gas supplied to the gas turbine;
- bearing and/or housing vibrations in the gas turbine.

17. Device for the computer-assisted monitoring of the operation of a technical system, particularly an electrical energy-generating installation, wherein the device comprises a computer unit which is designed to carry out a method according to one of the preceding claims.

18. Technical system, comprising the device according to Claim 17.

19. Computer program product with a program code stored on a machine-readable medium to carry out the method according to one of Claims 1 to 16 when the program code is executed on a computer.

## Revendications

1. Procédé de surveillance assisté par ordinateur du fonctionnement d'un système technique, en particulier d'une installation de production d'énergie électrique, dans lequel le système technique est caractérisé, à des instants de fonctionnement correspondants (t), par un vecteur d'état composé de plusieurs grandeurs d'entrée (x(t)) et d'au moins une grandeur de sortie à surveiller (y(t)), dans lequel
a) on pronostique pour des instants de fonctionnement respectifs (t) ladite au moins une grandeur de sortie (y(t)) en se basant sur des grandeurs d'entrée (x(t)) apparues pendant le fonctionnement du système technique avec un modèle (NN) commandé par des données, qui est appris au moyen de données d'apprentissage à partir de vecteurs d'état connus;
b) on applique pour des instants de fonctionnement respectifs un ou plusieurs estimateur(s) de densité (DE), qui sont appris au moyen de grandeurs d'entrée connues (x(t)) des données d'apprentissage, au nombre de grandeurs d'entrée (x(t)) à l'instant de fonctionnement correspondant (t), et on détermine ainsi un degré de confiance (C(t)), qui est d'autant plus élevé que la similitude du nombre de grandeurs d'entrée (x(t)) à l'instant de fonctionnement correspondant (t) avec des grandeurs d'entrée connues (x(t)) provenant des données d'apprentissage est plus grande;
**caractérisé en ce que**
c) on détermine pour des cycles respectifs (CY) de plusieurs instants de fonctionnement successifs (t) un écart pondéré moyen (E(t)) sur le nombre des vecteurs d'état dans le cycle respectif (CY) entre ladite au moins une grandeur de sortie pronostiquée (y(t)) et ladite au moins une grandeur de sortie (y⁰(t)) apparue dans le fonctionnement du système technique, dans lequel des vecteurs d'état, dont le nombre de grandeurs d'entrée présentent de faibles degrés de confiance (C(t)), sont moins pondérés dans l'écart pondéré moyen;
d) on constate un fonctionnement défectueux du système technique dans le cas où tous les écarts pondérés moyens (E(t)) remplissent, pour un nombre de cycles successifs (CY), qui est plus grand qu'un seuil chiffré prédéterminé (Cnt_{Th}), un ou plusieurs critère (s) comprenant le critère qu'ils dépassent sensiblement une valeur de seuil prédéterminée (E_{Th}).

2. Procédé selon la revendication 1, dans lequel on constate à l'étape d) un fonctionnement défectueux dans le cas où tous les écarts pondérés moyens (E(t)) pour un nombre de cycles successifs (CY), qui est plus grand que le seuil chiffré prédéterminé (Cnt_{Th}), remplissent l'autre critère qu'ils correspondent à des grandeurs de sortie pronostiquées (y(t)), qui sont toujours plus petites ou toujours plus grandes que les grandeurs de sortie correspondantes (y⁰(t)) apparues dans le fonctionnement du système technique.

3. Procédé selon la revendication 1 ou 2, dans lequel on émet une alarme et/ou on introduit une ou plusieurs mesure(s) de sécurité pour la protection du système technique, lorsque l'on constate un fonctionnement défectueux du système technique.

4. Procédé selon l'une quelconque des revendications précédentes, dans lequel ladite au moins une grandeur de sortie (y(t)) comprend une grandeur de mesure dans le système technique et/ou est déterminée à partir d'une ou de plusieurs grandeur(s) de mesure dans le système technique et/ou est une grandeur régulée dans le fonctionnement du système technique.

5. Procédé selon l'une quelconque des revendications précédentes, dans lequel le nombre de grandeurs d'entrée (x(t)), qui sont contenues dans un vecteur d'état respectif, est constaté en se basant sur un modèle statistique d'apprentissage et/ou des connaissances d'expert.

6. Procédé selon l'une quelconque des revendications précédentes, dans lequel le modèle commandé par des données (NN) est basé sur un réseau neuronal, en particulier un réseau neuronal récurrent, et/ou des machines à vecteurs de support et/ou des processus gaussiens.

7. Procédé selon l'une quelconque des revendications précédentes, dans lequel le ou les estimateur(s) de densité (DE) est/sont basé(s) sur un algorithme de cloud neuronal.

8. Procédé selon l'une quelconque des revendications précédentes, dans lequel on détermine l'écart pondéré moyen (E(t)) de telle manière qu'il ne soit tenu compte dans l'écart pondéré moyen (E(t)) que des vecteurs d'état dont le nombre de grandeurs d'entrée (x(t)) présentent des degrés de confiance (C(t)) supérieurs à un seuil de confiance (C_{Th}), dans lequel les vecteurs d'état pris en considération dans l'écart pondéré moyen (E(t)) sont de préférence pondérés de manière égale.

9. Procédé selon l'une quelconque des revendications précédentes, dans lequel on constate la valeur de seuil prédéterminée (E_{Th}) au moyen de données de validation comprenant des vecteurs d'état connus à des instants de fonctionnement correspondants (t), dans lequel on détermine pour des instants de fonctionnement respectifs (t), à partir des données de validation la dispersion des écarts entre ladite au moins une grandeur de sortie (y(t)), que l'on pronostique avec le modèle appris commandé par des données (NN) en se basant sur des données d'entrée (x(t)) à partir des données de validation, et ladite au moins une grandeur de sortie (y⁰(t)), qui est contenue dans le vecteur d'état (x(t)) des données de validation à l'instant de fonctionnement respectif (t), dans lequel on détermine la valeur de seuil prédéterminée (E_{Th}) à partir de la dispersion des écarts, de telle manière que la valeur de seuil prédéterminée (E_{Th}) soit d'autant plus élevée que la dispersion est plus grande.

10. Procédé selon la revendication 9, dans lequel la dispersion est représentée par l'écart type ou la variance de la distribution de fréquence des écarts déterminés au moyen des données de validation ou dépend de l'écart type ou de la variance, dans lequel la valeur de seuil prédéterminée (E_{Th}) représente de préférence l'écart type ou la variance multiplié(e) par un facteur positif.

11. Procédé selon l'une quelconque des revendications précédentes, dans lequel à l'étape d), chaque fois que l'écart pondéré moyen (E(t)) pour un cycle (CY) remplit le ou les critère(s) comprenant le critère selon lequel il dépasse sensiblement une valeur de seuil prédéterminée (E_{Th}), on fait avancer un compteur (Cnt(t)), dans lequel à chaque avancement du compteur (Cnt(t)), on émet un avertissement (W) et on constate en outre un fonctionnement défectueux du système technique lorsque l'avancement du compteur entraîne que le nombre des cycles (CY) se succédant dans le temps est plus grand que le seuil chiffré prédéterminé (Cnt_{Th}), dans lequel le compteur (Cnt(t)) est ramené à une valeur initiale, lorsque l'écart pondéré moyen (E(t)) ne remplit pas le ou les critère(s).

12. Procédé selon la revendication 11, **caractérisé en ce que** l'on émet différents types d'avertissements (W) en fonction du nombre de cycles successifs (CY) depuis la réinitialisation du compteur (Cnt(t)) dans lesquels les écarts pondérés moyens (E(t)) remplissent le ou les critère(s).

13. Procédé selon l'une quelconque des revendications précédentes en combinaison avec la revendication 3 ou 11 ou 12, dans lequel l'avertissement (W) et/ou l'alarme comprend l'émission d'un signal et/ou l'envoi d'un message.

14. Procédé selon l'une quelconque des revendications précédentes, dans lequel on répète un apprentissage du modèle commandé par des données (NN) et/ou du ou des estimateur (s) de densité (DE) à des intervalles de temps prédéterminés avec des vecteurs d'état nouvellement ajoutés au cours du fonctionnement du système technique comme données d'apprentissage.

15. Procédé selon l'une quelconque des revendications précédentes, dans lequel on surveille le fonctionnement d'une installation de production d'énergie électrique comprenant une turbine à gaz.

16. Procédé selon la revendication 15, dans lequel le nombre de grandeurs d'entrée et/ou ladite au moins une grandeur de sortie comprennent une ou plusieurs des grandeurs suivantes de la turbine à gaz:
- le rendement du compresseur de la turbine à gaz;
- le rendement de turbine de la turbine à gaz;
- la température régulée des gaz d'échappement de la turbine à gaz;
- la position d'une ou de plusieurs aube(s) directrice(s), en particulier dans le compresseur de la turbine à gaz;
- la vitesse de rotation de la turbine à gaz;
- une ou plusieurs pression (s) et/ou température (s) dans la turbine à gaz, en particulier la température d'entrée et/ou la pression d'entrée et/ou la température de sortie et/ou la pression de sortie dans le compresseur et/ou dans la turbine;
- la température de l'environnement, dans lequel la turbine à gaz fonctionne;
- l'humidité de l'air de l'environnement, dans lequel la turbine à gaz fonctionne;
- La pression d'air de l'environnement, dans lequel la turbine à gaz fonctionne;
- un ou plusieurs débit(s) massique(s) et/ou volumique(s);
- un ou plusieurs paramètre(s) d'un système de refroidissement et/ou d'un système auxiliaire et/ou de systèmes d'huile de lubrification et/ou de paliers dans la turbine à gaz, en particulier la position d'une ou de plusieurs soupape(s) pour la fourniture d'air de refroidissement;
- la puissance de la turbine à gaz, en particulier un facteur de puissance en pourcentage;
- la qualité du combustible de la turbine à gaz;
- les émissions de polluants de la turbine à gaz, en particulier l'émission d'oxydes d'azote et/ou de monoxyde de carbone;
- la température d'une ou de plusieurs aube(s) de turbine de la turbine à gaz;
- la dynamique de combustion de la chambre de combustion de la turbine à gaz;
- la quantité de gaz fournie à la turbine à gaz;
- les vibrations des paliers et/ou du corps dans la turbine à gaz.

17. Dispositif pour la surveillance assistée par ordinateur du fonctionnement d'un système technique, en particulier d'une installation de production d'énergie électrique, dans lequel le dispositif comprend une unité informatique, qui est configurée de façon à exécuter un procédé selon l'une quelconque des revendications précédentes.

18. Système technique, comprenant le dispositif selon la revendication 17.

19. Produit de programme informatique avec un code de programme mémorisé sur un support lisible par la machine pour l'exécution du procédé selon l'une quelconque des revendications 1 à 16, lorsque le code de programme est exécuté sur un ordinateur.
